# EUROPEAN PATENT APPLICATION

(11) **EP 0 891 736 A1**
(43) Date of publication of application: **20.01.1999**
(21) Application number: 97305201.2
(22) Date of filing: 14.07.1997
(51) Int. Cl.: A47J 37/12

(54) **Basket handle for deep fryer**

(71) Applicant: Yahorng Electronic Co Ltd, Antin Shiang, Tainan (TW); Perry, Julie Elizabeth, Mount Tabor, Halifax HX2 0ZR (GB)
(72) Inventor: Huang, Chin-I, Antin Shiang, Tainan, R.O.C. (TW); Tsung, Wu Cheng, Antin Shiang, Tainan, R.O.C. (TW); Tien, Chiu San, Antin Shiang, Tainan, R.O.C. (TW)
(74) Representative: Wharton, Peter Robert

(57) **Abstract**

A basket and handle assembly for use with a deep fryer (10), the assembly comprising handle grip (18) which may be pivoted between a substantially horizontal, operative position and a substantially vertical stowed position, and linkage means (44,46, 22, 24) for translating the pivoting movement of the handle into substantially vertical movement of the basket such that by pivoting the handle between the operative and stowed positions the basket (16) may be lowered into or raised up from the base of the deep fryer interior (12a).

## Description

The present invention relates to a basket handle which enables the basket to be lowered into and raised from the interior of a food deep fryer.

According to a first aspect of the present invention there is provided a basket and handle assembly for use with a deep fryer, the assembly comprising handle grip which may be pivoted between a substantially horizontal, operative position and a substantially vertical stowed position, and linkage means for translating the pivoting movement of the handle into substantially vertical movement of the basket such that by pivoting the handle between the operative and stowed positions the basket may be lowered into or raised up from the base of the deep fryer interior.

Preferably, the assembly also includes means to lock the handle in the substantially horizontal, operative position in which the basket and handle assembly may be removed from the fryer. This conveniently takes the form of a tongue which is normally urged into a corresponding groove by spring means but which may be released from the groove by operation of a release catch.

In the preferred embodiment the linkage means comprises at least one basket connecting rod mounted for limited pivotal movement on the basket, which is raised, or lowered, under the action of at least one link bar, the position of the latter and hence of the connecting rod, being determined by the angular orientation of the handle grip.

Conveniently, there is provided a pair of basket connecting rods, and a pair of link bars (one link bar being disposed on either side of the handle)

According to a second aspect of the present invention there is provided a deep fryer with basket and handle assembly, the fryer including a container for holding a cooking medium such as oil or fat, the basket and handle assembly comprising handle grip which may be pivoted between a substantially horizontal, operative position and a substantially vertical stowed position, and linkage means for translating the pivoting movement of the handle into substantially vertical movement of the basket such that by pivoting the handle between the operative and stowed positions the basket may be lowered into or raised up from the base of the container.

Preferably, the basket and handle assembly and deep fryer include cooperating mechanisms by means of which the assembly may be supported on the fryer whilst the basket is raised or lowered into the container.

Embodiments of the present invention will now be described, by way of example only, with reference to the accompanying drawings, in which:
Figure 1 illustrates in side view the basket and handle assembly of the present invention, shown fitted within a deep fryer, with the handle in the down (stowed) position,
Figure 2 illustrates the detail of the basket and handle assembly, with the handle in the up (operative) position, and

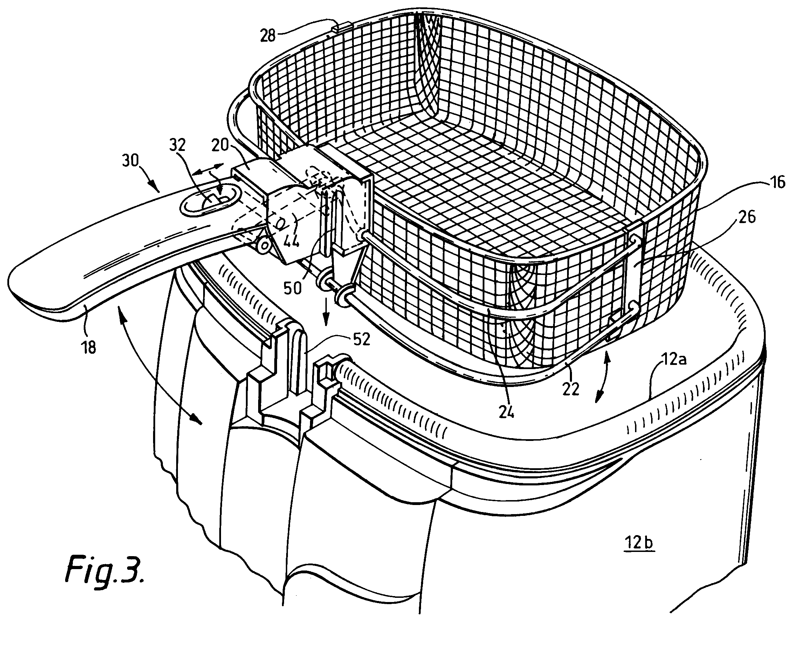

Figure 3 illustrates the basket and handle assembly in relation to the deep fryer within which it is intended to be used.

Referring to the drawings, a deep fryer comprises a container 12 (including an inner oil or fat container 12a and an outer shell 12b) and a hinged lid 14 which is generally kept closed during the cooking operation. Within the fryer 10 there is disposed a basket 16 of wire mesh or the like, to which a handle assembly 30 is attached by means of a raising and lowering mechanism which will now be described in more detail.

The handle assembly comprises a grip 18 one end of which is pivotally mounted about pivot axis 19 to an intermediate member 20. The intermediate member 20 is secured to a pair of basket connecting rods, each end of which is mounted for limited pivotal movement on the basket, by means of a pair of brackets.

Within the handle grip 18, in the region adjacent the intermediate member 20, there is disposed a sprung loaded locking mechanism comprising a thumb operated release catch 32 which, when pulled back against the action of spring, pulls integral tongue 36 out of groove 38, to unlock the mechanism.

Directly beneath the pivot axis 19 the handle grip 18 includes a pair of lugs , one each side of the handle, between which there is fixed a pivot pin 42. A pair of link bars connect the pivot pin 42 to a pair of levers 46, the latter being pivotally connected to basket connecting rod 24 by means of pivot pin 47. The other connecting rod 22 is fixed to the lower end of support plate 48.

The link bars 44 each have two slots disposed therein, such that pin 42 will travel along slot 41 and pin 47 will travel along slot 45, when the position of the link bar 44 is altered by pivoting the handle 18 about pivot axis 19.

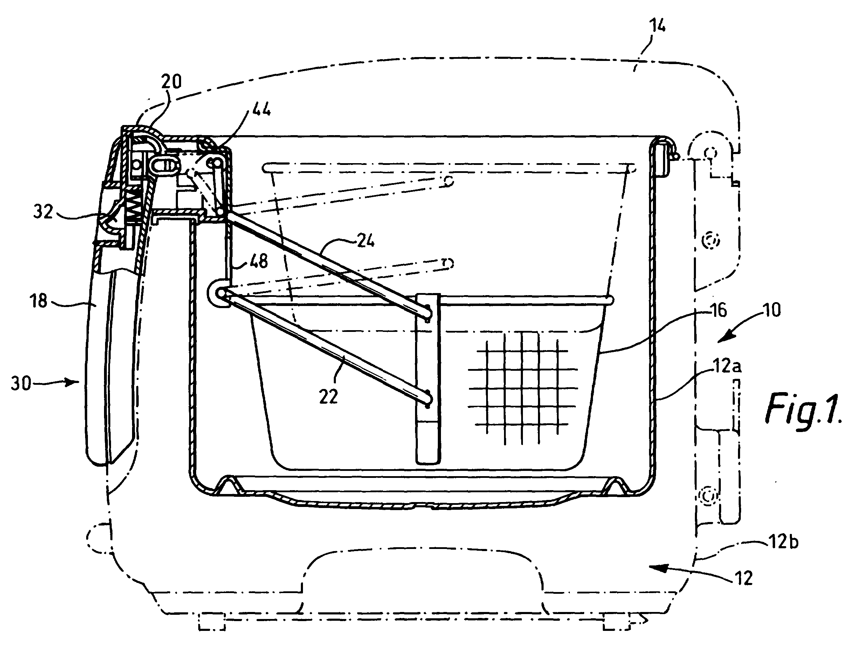

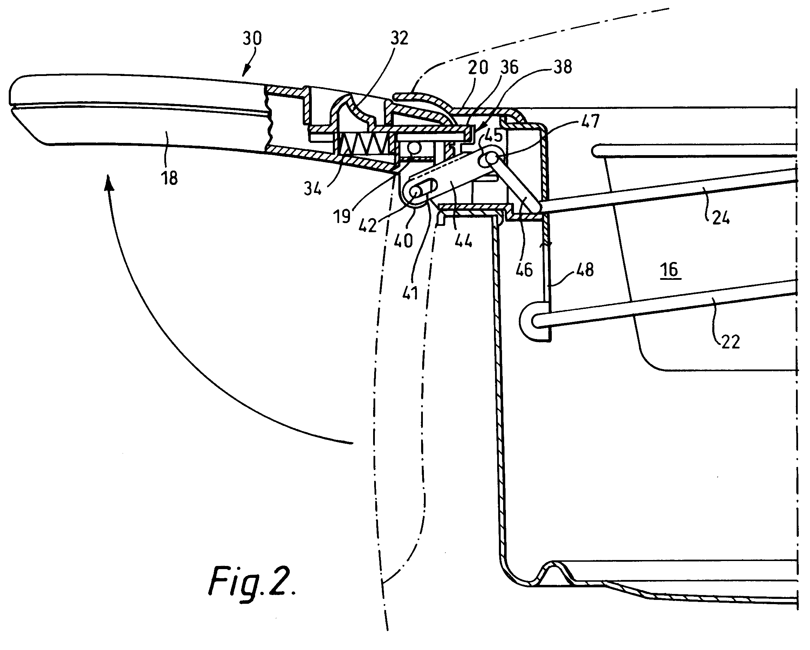

From the "down" or stowed handle position illustrated in Figure 1, pivoting the handle grip 18 upwards initially causes the pivot pin 42 to travel along slot 41 and subsequently pushes the link bar 44 down at the back and up at the front, as shown in Figure 2, causing the connecting rods to pivot with respect to brackets 26, 28, until they assume the position shown in Figure 2. Continuing the pivoting movement of handle grip 18 up into the raised, substantially horizontal position of Figure 2 causes tongue 36 to move into slot 38, thereby locking the handle assembly with respect to the basket connecting rods.

To release the locking mechanism, the thumb catch 32 is drawn back, as previously described, releasing tongue 36 from groove 38, and allowing the handle grip 18 to be pivoted back down towards the stowed position shown in Figure 1. This operates the link bar 44 in a reverse sense to that already described, that is to say upon downward pivoting the link bar 44 is forced up at the back until it assumes the horizontal position shown in Figure 1, lowering the basket connecting rods to the position shown in Figure 1.

When the handle is in the locked horizontal, operative position the basket and handle assembly can be removed from the fryer 10. When it is required to replace the basket 16 within the fryer, the whole assembly is lowered into the fryer, by sliding the pair of recesses 50 (one either side of intermediate member 20 over matching support protrusions 52 provided in the fryer wall. With the basket thus supported, the thumb catch 32 is released and the handle pivoted downwards, allowing the connecting rods to lower the basket 16 towards the base of the deep fryer inner container 12a.

## Claims

1. A basket and handle assembly for use with a deep fryer (10), the assembly comprising handle grip (18) which may be pivoted between a substantially horizontal, operative position and a substantially vertical stowed position, and linkage means (44,46, 22, 24) for translating the pivoting movement of the handle into substantially vertical movement of the basket such that by pivoting the handle between the operative and stowed positions the basket (16) may be lowered into or raised up from the base of the deep fryer interior (12a).

2. An assembly according to Claim 1, wherein there is included means (36, 38) to lock the handle (18) in the substantially horizontal, operative position in which the basket and handle assembly may be removed from the fryer.

3. An assembly according to Claim 2 wherein said locking means comprises a tongue (36) which is normally urged into a corresponding groove (38) by spring means (34) but which may be released from the groove by operation of a release catch (32).

4. An assembly according to any of the preceding Claims, wherein the linkage means comprises at least one basket connecting rod (24) mounted for limited pivotal movement on the basket (16), which is raised, or lowered, under the action of at least one link bar (44), the position of the latter and hence of the connecting rod (24), being determined by the angular orientation of the handle grip (18).

5. An assembly according to Claim 4 wherein there is provided a pair of basket connecting rods (22, 24), and a pair of link bars (44) (one link bar being disposed on either side of the handle)

6. A deep fryer (10) with basket and handle assembly, the fryer including a container (12a) for holding a cooking medium such as oil or fat, the basket and handle assembly comprising handle grip (18) which may be pivoted between a substantially horizontal, operative position and a substantially vertical stowed position, and linkage means (44, 46, 24, 22) for translating the pivoting movement of the handle into substantially vertical movement of the basket (16) such that by pivoting the handle between the operative and stowed positions the basket may be lowered into or raised up from the base of the container (12a).

7. A deep fryer with basket and handle assembly wherein the fryer and basket/handle assembly include cooperating mechanisms (52, 50) by means of which the assembly may be supported on the fryer whilst the basket is raised or lowered into the container.
